# EUROPÄISCHE PATENTSCHRIFT

(11) **EP 3 498 536 B1**
(45) Veröffentlichungstag und Bekanntmachung des Hinweises auf die Patenterteilung: **19.08.2020**
(21) Anmeldenummer: 18207163.9
(22) Anmeldetag: 20.11.2018
(51) Int. Cl.: B60R 7/04

(54) **AUFBEWAHRUNGSBEHÄLTER FÜR EIN KRAFTFAHRZEUG UND KRAFTFAHRZEUG**
MOTOR VEHICLE AND STORAGE CONTAINER FOR A MOTOR VEHICLE
RÉCIPIENT DE STOCKAGE POUR UN VÉHICULE AUTOMOBILE ET VÉHICULE AUTOMOBILE

(30) Priorität: 13.12.2017 DE 102017222655
(43) Veröffentlichungstag der Anmeldung: 19.06.2019
(73) Patentinhaber: VOLKSWAGEN AKTIENGESELLSCHAFT, 38440 Wolfsburg (DE)
(72) Erfinder: Ette, Bernd, 38442 Wolfsburg (DE)

(56) Entgegenhaltungen:
- JP-A- 2010 053 550
- KR-A- 20140 080 107

## Beschreibung

Der vorliegende Erfindung betrifft einen Aufbewahrungsbehälter für ein Kraftfahrzeug und ein Kraftfahrzeug.

Um ein Kraftfahrzeug zu einem sicheren Aufbewahrungsort von Gegenständen zu machen, ist es üblich, Diebstahlwarnanlagen in dem Kraftfahrzeug zu installieren. Nach dem derzeitigen Stand der Technik handelt es sich dabei größtenteils um Hüllenüberwachungsanlagen, welche dazu eingerichtet sind, die Außenhülle des Kraftfahrzeugs zu überwachen und dadurch beispielsweise einen, durch einen Einbrecher durchgeführten, Scheibenbruch an dem Kraftfahrzeug zu detektieren. Erfolgt beispielsweise der besagte Scheibenbruch, so erzeugt die Außenhüllenüberwachung als Reaktion darauf einen Signalton oder übermittelt ein Signal an ein Mobiltelefon des Fahrzeuginhabers. Nachteilig an den beschriebenen Hüllenüberwachungsanlagen ist die Tatsache, dass Gegenstände, welche sich im Kraftfahrzeuginnenraum befinden, nicht vor einem Diebstahl geschützt sind. Lässt sich ein Einbrecher nicht durch den Signalton abschrecken, hat er freien Zugriff auf die im Kraftfahrzeug befindlichen Gegenstände.

Eine weitere Problematik ergibt sich, wenn sich in dem Kraftfahrzeuginnenraum elektronische Geräte befinden, die durch elektromagnetische Strahlen lokalisierbar sind oder mittels eines Funksignals aktiv auf Ihre Anwesenheit hinweisen. Dabei kann es sich um Geldbörsen mit Karten, Tablettrechner oder Mobiltelefone handeln, welche beispielsweise eine Schnittstelle für NFC (Near Field Communication), RFID (radio-frequency identification), Bluetooth oder WLAN (Wireless Local Area Network) aufweisen. So kann es für einen potentiellen Einbrecher möglich sein, diese Gegenstände in einem Kraftfahrzeuginnenraum zu orten, auch wenn diese in einem Fach im Kraftfahrzeuginnenraum verstaut und somit nicht von außen sichtbar abgelegt sind. Der potentielle Einbrecher hat somit die Möglichkeit, zu bewerten, ob sich ein Einbruch in das jeweilige Kraftfahrzeug lohnen würde.

Um Gegenstände in einem Kraftfahrzeug vor einem Diebstahl zu schützen, wurden Aufbewahrungsbehälter für einen Kraftfahrzeuginnenraum entwickelt.

JP 2010 053550 A offenbart einen Aufbewahrungsbehälter gemäß dem Oberbegriff des Anspruchs 1.

In der DE 20 2016 100 303 U1 ist eine Aufbewahrungseinrichtung in einem Fahrzeug beschrieben. In der Aufbewahrungseinrichtung ist ein verschließbarer Behälter angeordnet, der eine Befestigungseinrichtung zur Festlegung des Behälters an einem Strukturbauteil des Fahrzeugs aufweist. Der Zugang zu dem Behälter ist durch eine Verschlusseinrichtung zumindest teilweise verschließbar.

In der US 2016/0024816 A1 ist ein Sicherheitssystem für eine Fahrzeugkonsole mit einer elektrisch verriegelbaren Abdeckung beschrieben. Die elektrisch verriegelbare Abdeckung kann mittels eines Aktuators entriegelt und verriegelt werden, um ein durch die Abdeckung geschütztes Innenfach freizugeben oder zu verschließen.

In der DE 10 2011 121 308 A1 ist eine Staufachanordnung für ein Kraftfahrzeug beschrieben. Die Staufachanordnung umfasst ein Staufach mit einer durch einen Antrieb verstellbaren Staufachabdeckung, welche auf Basis einer Betätigung eines Schlüssels verstellt werden kann.

In der DE 20 2014 103 855 U1 sind ein System und eine Vorrichtung zum Bereitstellen eines sicheren Ablagefachs beschrieben. Das System umfasst ein Ablagefach, welches von einer Fahrzeugtür abgedeckt wird.

Eine Möglichkeit, einen Missbrauch eines Funkschlüssels zu verhindern, ist in der folgenden Offenlegungsschrift beschrieben.

In der DE 10 2014 006 389 B3 ist ein Funkschlüssel mit Deaktivierungsfunktion beschrieben. Dabei ist es vorgesehen, dass der Funkschlüssel eine Vorrichtung umfasst, welche dazu eingerichtet ist, einen Sender und/oder einen Empfänger des Funkschlüssels zu deaktivieren.

Es ist eine Aufgabe der vorliegenden Erfindung, eine diebstahlsichere Aufbewahrung von Gegenständen in einem Kraftfahrzeuginnenraum zu ermöglichen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche, die folgende Beschreibung sowie die Figuren.

Durch die Erfindung ist ein Aufbewahrungsbehälter für ein Kraftfahrzeug bereitgestellt. Der Aufbewahrungsbehälter weist ein Verriegelungselement auf, welches dazu eingerichtet ist, einen Verschluss einer Aufbewahrungskammer des Aufbewahrungsbehälters zu verriegeln. Der Aufbewahrungsbehälter weist einen Motor auf, welcher dazu eingerichtet ist, das Verriegelungselement zu öffnen und zu schließen. Der Aufbewahrungsbehälter weist ein innenliegendes Autorisierungselement auf, welches eine Antenneneinrichtung, eingerichtet zum Empfangen eines Öffnungssignals eines von dem Aufbewahrungsbehälter verschiedenen außenliegendem Autorisierungselement umfasst. Das innenliegende Autorisierungselement umfasst eine Steuereinheit, eingerichtet zur Ansteuerung des Motors des Aufbewahrungsbehälters. Das innenliegende Autorisierungselement weist einen Bewegungssensor auf, welcher dazu eingerichtet ist, eine Bewegungscharakteristik des innenliegenden Authentifizierungselements zu erfassen. Das innenliegende Autorisierungselement ist dazu eingerichtet, Bewegungsdaten betreffend eine Bewegungscharakteristik des außenliegenden Autorisierungselements über die Antenneneinrichtung zu empfangen und mittels der Steuereinheit mit seiner eigenen Bewegungscharakteristik zu vergleichen. Bei dem Empfang des Öffnungssignals und einer mit der Bewegungscharakteristik des innenliegenden Autorisierungselements übereinstimmenden Bewegungscharakteristik des außenliegenden Autorisierungselements ist es vorgesehen, dass das innenliegende Autorisierungselement ein Entriegelungssignal zur Öffnung des Verriegelungselements mittels der Steuereinheit erzeugt.

Mit anderen Worten sieht die Erfindung einen Aufbewahrungsbehälter vor, welcher für eine Verwendung in oder in Verbindung mit einem Kraftfahrzeug vorgesehen ist. Dieser Aufbewahrungsbehälter weist eine Aufbewahrungskammer auf, welche durch einen Verschluss der Aufbewahrungsbehälter verschließbar sein kann. Um eine Verriegelung des Verschlusses und somit ein Verschließen der Aufbewahrungskammer zu ermöglichen, weist der Aufbewahrungsbehälter ein Verriegelungselement auf. Das Verriegelungselement des Aufbewahrungsbehälters kann mittels eines Motors des Aufbewahrungsbehälters geöffnet und geschlossen werden. Der Aufbewahrungsbehälter weist ein innenliegendes Autorisierungselement auf. Das innenliegende Autorisierungselement weist eine Antenneneinrichtung auf, worüber das innenliegende Autorisierungselement ein Öffnungssignal von einem außenliegenden Autorisierungselement empfangen kann. Das außenliegende Autorisierungselement ist kein Bestandteil des Aufbewahrungsbehälters. Das innenliegende Autorisierungselement weist auch eine Steuereinheit auf, durch welche das innenliegende Autorisierungselement den Motor des Aufbewahrungsbehälters ansteuern kann, um das Verriegelungselement zu öffnen oder zu schließen. Die Steuereinheit kann ein Mikroprozessor oder ein Mikrocontroller sein. Das innenliegende Autorisierungselement weist einen Bewegungssensor zur Erfassung einer Bewegungscharakteristik des innenliegenden Autorisierungselements auf. Mittels der Antenneneinrichtung ist das innenliegende Autorisierungselement dazu eingerichtet, Bewegungsdaten, welche eine Bewegungscharakteristik des außenliegenden Autorisierungselements betreffen, zu empfangen. Das außenliegende Autorisierungselement kann baugleich zu dem innenliegenden Autorisierungselement sein. Es kann seine Bewegungscharakteristik mittels seines Bewegungssensors erfassen und die betreffenden Bewegungsdaten mittels seiner Antenneneinrichtung an die Antenneneinrichtung des innenliegenden Autorisierungselements versenden. Das innenliegende Autorisierungselement ist aufgrund der Steuereinheit dazu eingerichtet, die Bewegungscharakteristik des innenliegenden Autorisierungselements und die Bewegungscharakteristik des außenliegenden Autorisierungselements zu vergleichen. Die Steuereinheit ist dazu eingerichtet, im Fall einer Übereinstimmung der beiden Bewegungscharakteristiken, ein Entriegelungssignal, welches eine Öffnung des Verriegelungselements bewirkt, zu erzeugen, wenn ein Öffnungssignal von dem außenliegenden Autorisierungselement empfangen wird.

Dadurch ergibt sich der Vorteil, dass mit den erforderlichen übereinstimmenden Bewegungscharakteristiken, ein zur Öffnung des Aufbewahrungsbehälters notwendiges Sicherheitsmerkmal bereitgestellt wird.

Der Aufbewahrungsbehälter kann beispielsweise als hohler Würfel oder Quader oder Zylinder gestaltet sein, welcher für eine Anordnung an einer vorbestimmten Halterung oder Position in einem Kraftfahrzeuginnenraum ausgelegt sein kann. In dem Aufbewahrungsbehälter kann sich die Aufbewahrungskammer befinden, welche durch eine Zugangsöffnung zugänglich ist, die durch den Verschluss verschlossen werden kann, und welche durch den Aufbewahrungsbehälter umschlossen sein kann. Es kann sich also bei der Aufbewahrungskammer um eine Kammer oder einen Stauraum handeln, welche beispielsweise durch einen Schraubverschluss oder eine Klappe als Verschluss zugänglich ist. Der Aufbewahrungsbehälter kann das Verriegelungselement aufweisen, welches den Verschluss, je nach einer Stellung des Verriegelungselements verriegelt oder entriegelt. Das Verriegelungselement kann beispielsweise einen Stößel umfassen, welcher in einer Stellung in einer Führung des Verschlusses angeordnet sein kann, wodurch der Verschluss verriegelt ist. In dieser Stellung kann der Verschluss nicht geöffnet werden, wodurch kein Zugriff auf die Aufbewahrungskammer von außen möglich ist. Das Verriegelungselement kann mittels des Motors bewegt, also geöffnet und geschlossen werden. Dazu kann es vorgesehen sein, dass der Motor den Stößel des Verriegelungselements in eine jeweilige Position verschiebt. Um einen Zugriff auf die Aufbewahrungskammer zu ermöglichen, kann der Aufbewahrungsbehälter das innenliegende Autorisierungselement aufweisen. Dieses kann beispielsweise ein Bluetooth- Gerät oder ein NFC-Transmitter (Tag) sein. Das innenliegende Autorisierungselement kann die Antenneneinrichtung, beispielsweise als Spule, aufweisen wodurch es eine Funkschnittstelle für eine Kommunikation mit anderen Autorisierungselementen aufweist. Die Steuereinheit des innenliegenden Autorisierungselement kann beispielsweise als Mikrocontroller oder Mikroprozessor gestaltet sein und den Motor der Aufbewahrungskammer ansteuern. Das innenliegende Autorisierungselement kann den Bewegungssensor umfassen, wobei dieser beispielsweise einen oder mehrere Freiträger aufweisen kann, welche sich bei einer Beschleunigung des innenliegenden Autorisierungselement verbiegen und somit die Erfassung einer Bewegungscharakteristik des innenliegenden Autorisierungselements ermöglichen können. Die Bewegungscharakteristik kann eine Lage, einen Betrag und eine Richtung einer Beschleunigung umfassen. Die Bewegungscharakteristik kann momentane Werte oder einen zeitlichen Verlauf, umfassen. Um eine Öffnung des Verschlusses zu ermöglichen, kann das außenliegende Autorisierungselement bereitgestellt sein, welches baugleich zu dem innenliegenden Autorisierungselement sein kann. Das außenliegende Autorisierungselement kann zu dem Aufbewahrungsbehälter beabstandet angeordnet sein oder an dem Aufbewahrungsbehälter anliegen, während das Öffnungssignal erzeugt wird. Das außenliegende Autorisierungselement kann das Öffnungssignal und die Bewegungsdaten betreffend die Bewegungscharakteristik des außenliegenden Autorisierungselements an das innenliegende Autorisierungselement senden. Das Öffnungssignal und die Bewegungsdaten können beispielsweise als Funksignale gestaltet sein und durch die Antenneneinrichtung des innenliegenden Autorisierungselements empfangen werden. Die Steuereinheit des innenliegenden Autorisierungselement kann die Bewegungscharakteristik des außenliegenden Autorisierungselements aus den empfangenen Bewegungsdaten auslesen. Die Bewegungscharakteristik des innenliegenden Autorisierungselement und die Bewegungscharakteristik des außenliegenden Autorisierungselement können durch die Steuereinheit verglichen werden. Wenn die Bewegungscharakteristiken übereinstimmen und das Öffnungssignal empfangen wurde, kann die Steuereinheit den Motor des Aufbewahrungsbehälters ansteuern und den Verschluss der Aufbewahrungskammer mittels des Entriegelungssignals entriegeln. Eine Übereinstimmung kann beispielsweise vorliegen, wenn die Richtung und der Betrag der Beschleunigung beider Bewegungscharakteristiken eine vorbestimmte Abweichung voneinander unterschreiten. So ist es möglich, dass das Entriegelungssignal erzeugt wird, wenn das außenliegende Autorisierungselement an dem Aufbewahrungsbehälter anliegt und somit in einem gleichen Umfang bewegt wird. Es kann auch sein, dass das Entriegelungssignal nicht erzeugt wird, wenn der Aufbewahrungsbehälter beispielsweise ruhend in dem Kraftfahrzeuginnenraum angeordnet ist und das außenliegende Autorisierungselement in einer sich bewegenden Hand gehalten wird. Es kann vorgesehen sein, dass das innenliegende Autorisierungselement nur das Öffnungssignal eines vorbestimmten außenliegenden Autorisierungselements bearbeitet. So kann es vorgesehen sein, dass eine Öffnung des Aufbewahrungsbehälters nur mittels eines vorbestimmten Öffnungssignals ermöglicht werden kann. Öffnungssignale von nicht berechtigten Autorisierungselementen können beispielsweise keine Öffnung des Aufbewahrungsbehälters ermöglichen.

Eine Weiterbildung der Erfindung sieht vor, dass eine Kammerwand der Aufbewahrungskammer und der Verschluss eine elektromagnetische Schirmungsvorrichtung mit einem elektrisch leitendem Material aufweisen und die Aufbewahrungskammer im verriegelten Zustand komplett durch die Schirmungsvorrichtung umschlossen ist. Mit anderen Worten umfasst eine Kammerwand der Aufbewahrungskammer und der Verschluss, durch welche die Aufbewahrungskammer im geschlossenen Zustand umschlossen ist, eine elektromagnetische Schirmungsvorrichtung, welche dazu eingerichtet ist, die Aufbewahrungskammer der Art zu Schirmen, dass elektromagnetische Strahlen in einem vorbestimmten Frequenzbereich nicht oder um ein vorbestimmtes Ausmaß geschwächt aus der Aufbewahrungskammer austreten. Zu diesem Zweck weist die Schirmungsvorrichtung ein elektrisch leitendes Material auf. Dadurch ergibt sich der Vorteil, dass elektromagnetische Strahlen, welche von einem Gerät in der Aufbewahrungskammer ausgestrahlt werden, nicht außerhalb der Aufbewahrungskammer empfangen werden können. Somit kann sichergestellt werden, dass das Gerät nicht von außen geortet werden kann. So ist es beispielsweise möglich, dass die Kammerwand und der Verschluss die Schirmungsvorrichtung aus Metall z.B. Kupfer oder Aluminium aufweisen, welche eine vorbestimmte elektrische Leitfähigkeit aufweist und in einem geschlossenen Zustand, einen Faraday'schen Käfig um die Aufbewahrungskammer darstellt.

Eine Weiterbildung der Erfindung sieht vor, dass der Aufbewahrungsbehälter einen elektrischen Energiespeicher aufweist, welcher dazu eingerichtet ist, den Motor mit elektrischer Energie zu versorgen. Mit anderen Worten umfasst der Aufbewahrungsbehälter zur Versorgung des Motors mit elektrischer Energie einen elektrischen Energiespeicher. Dadurch ergibt sich der Vorteil, dass der Aufbewahrungsbehälter nicht mit einem stationären elektrischen Anschluss verbunden sein muss, um den Motor betreiben zu können. So kann es vorgesehen sein, dass der Aufbewahrungsbehälter einen Akkumulator als Energiespeicher aufweist.

Eine Weiterbildung der Erfindung sieht vor, dass der Aufbewahrungsbehälter eine elektrische Anschlussvorrichtung umfasst, welche dazu eingerichtet ist, elektrische Leistung für den elektrischen Energiespeicher aufzunehmen und/oder elektrische Leistung aus dem elektrischen Energiespeicher abzugeben. Mit anderen Worten umfasst der Aufbewahrungsbehälter eine elektrische Anschlussvorrichtung, welche dazu eingerichtet ist, den elektrischen Energiespeicher mittels einer Aufnahme von elektrischer Leistung aufzuladen und/oder Leistung bereitzustellen. Dadurch ergibt sich der Vorteil, dass es nicht erforderlich ist, den elektrischen Energiespeicher aus dem Aufbewahrungsbehälter zu entnehmen, um ihn aufzuladen. Zusätzlich ermöglicht es die elektrische Anschlussvorrichtung, den Aufbewahrungsbehälter als tragbare elektrische Energiequelle (auch bekannt als Powerbank) zu nutzen. So ist es beispielsweise möglich, dass der Aufbewahrungsbehälter eine an der Außenseite des Aufbewahrungsbehälter angeordnete Steckverbindung als elektrische Anschlussvorrichtung aufweist, welche mit dem elektrischen Energiespeicher elektrisch leitend verbunden ist. Die Steckverbindung kann beispielsweise einen Anschluss nach dem USB-Standard umfassen, wodurch es beispielsweise möglich sein kann, ein Mobiltelefon über die elektrische Anschlussvorrichtung aufzuladen.

Eine Weiterbildung der Erfindung sieht vor, dass das innenliegende Autorisierungselement und/oder das außenliegende Autorisierungselement dazu eingerichtet ist, einen Identifikationscode eines Funkschlüssels auszulesen, falls der Funkschlüssel in der Aufbewahrungskammer angeordnet ist, und ein Sperrsignal für den Identifikationscode an ein Steuergerät einer Zentralverriegelung des Kraftfahrzeugs zu senden. Mit anderen Worten ist eines oder beide der Autorisierungselemente dazu ausgelegt, einen Identifikationscode eines sich in der Aufbewahrungskammer befindenden Funkschlüssels zu empfangen. Das Autorisierungselement ist dazu ausgelegt, für den Identifikationscode ein Sperrsignal zu erzeugen und an ein Steuergerät einer Zentralverriegelung des Kraftfahrzeugs zu senden, um den Funkschlüssel für eine Entriegelung des Kraftfahrzeugs und/oder eine Einleitung eines Startvorgangs eines Motors des Kraftfahrzeugs zu sperren. Dadurch ergibt sich der Vorteil, dass sichergestellt wird, dass ein sich in der Aufbewahrungskammer befindender Funkschlüssel im Fall eines Diebstahls nicht missbräuchlich zum Öffnen und/oder starten des Kraftfahrzeugs verwendet werden kann.

Eine Weiterbildung der Erfindung sieht vor, dass das innenliegende Autorisierungselement und/oder das außenliegende Autorisierungselement dazu eingerichtet ist, ein Deaktivierungssignal an ein Mobiltelefon zu senden, falls das Mobiltelefon in der Aufbewahrungskammer angeordnet ist. Mit anderen Worten ist eines oder beide der Autorisierungselemente dazu ausgelegt, ein Mobiltelefon, welches sich in der Aufbewahrungskammer befindet, zu erfassen und ein Deaktivierungssignal an das Mobiltelefon zu senden, wodurch das Mobiltelefon oder eine Funktion des Mobiltelefons deaktiviert wird. Dadurch ergibt sich der Vorteil, dass das Mobiltelefon keine elektromagnetischen Strahlungen aussendet, sobald es sich in der Aufbewahrungskammer befindet. So ist es Beispielsätze möglich, dass eines der Autorisierungselemente dazu eingerichtet ist, ein NFC- und/oder Bluetooth-Signal des Mobiltelefons mittels der Antenneneinrichtung zu empfangen, sobald sich das Mobiltelefon in der Aufbewahrungskammer befindet und mittels der Antenneneinrichtung das Deaktivierungssignal, wobei es sich um ein Bluetooth- und/oder ein NFC-Signal handeln kann, an das Mobiltelefon zu senden.

Eine Weiterbildung der Erfindung sieht vor, dass das innenliegende Autorisierungselement und das außenliegende Autorisierungselement baugleich sind. Mit anderen Worten weisen beide Autorisierungselemente einen identischen physischen Aufbau auf und umfassen identische Bauteile. Dadurch ergibt sich der Vorteil, dass keine separate Gestaltung der Autorisierungselement erforderlich ist und somit Kosten reduziert werden können. So ist es beispielsweise möglich, dass ein jeweiliges Autorisierungselement eine gleiche Hardware aufweist und in Abhängigkeit von einem in der Steuereinheit gespeicherten Code oder einem in der Steuereinheit aktivierten Modus, als innenliegendes oder außenliegendes Autorisierungselement definiert wird.

Eine Weiterbildung der Erfindung sieht vor, dass das innenliegende Autorisierungselement dazu eingerichtet ist, mittels der Antenneneinrichtung ein Ortungssignal aussenden. Mit anderen Worten ist das Autorisierungselement dazu ausgelegt, Ortungssignale mittels der Antenneneinrichtung auszusenden, welche dazu eingerichtet sind, eine Ortung des Autorisierungselements durch eine vorbestimmte Ortungsvorrichtung zu ermöglichen. Dadurch ergibt sich der Vorteil, dass sich der Aufbewahrungsbehälter orten lässt. So ist es beispielsweise möglich, dass das innenliegende Autorisierungselement über die Antenneneinrichtung ein periodisches elektromagnetisches Ortungssignal aussendet.

Zu der Erfindung gehört auch ein Kraftfahrzeug, welches eine Haltevorrichtung für den erfindungsgemäßen Aufbewahrungsbehälter aufweist. Die Haltevorrichtung weist eine Verschlussvorrichtung auf, welche dazu eingerichtet ist, den Aufbewahrungsbehälter zu arretieren und/oder zu umschließen. Die Haltevorrichtung weist einen elektrischen Versorgungsanschluss auf, welcher dazu eingerichtet ist, elektrische Leistung für die elektrische Anschlussvorrichtung des Aufbewahrungsbehälters bereitzustellen. Mit anderen Worten weist das Kraftfahrzeug für den Aufbewahrungsbehälter eine Haltevorrichtung auf. Der Aufbewahrungsbehälter kann mittels der Verschlussvorrichtung der Haltevorrichtung arretiert und/oder umschlossen werden. Die Haltevorrichtung umfasst auch einen elektrischen Versorgungsanschluss, welcher dazu vorgesehen ist, elektrische Leistung für den Aufbewahrungsbehälter bereitzustellen und über die elektrische Anschlussvorrichtung des Aufbewahrungsbehälters an den Energiespeicher des Aufbewahrungsbehälters zu übertragen. Durch die Erfindung ergibt sich der Vorteil, dass der elektrische Energiespeicher mittels der Haltevorrichtung geladen werden kann und diebstahlsicher in der Haltevorrichtung verwahrt werden kann, wenn er durch die Verschlussvorrichtung arretiert und/oder verschlossen ist. So kann es beispielsweise vorgesehen sein, dass ein an die Form des Aufbewahrungsbehälters abgestimmtes Fach als die Haltevorrichtung in einem Fahrzeuginnenraum des Kraftfahrzeugs angeordnet ist, welches einen Deckel als Verschlussvorrichtung aufweist, welcher beispielsweise mittels einer Zentralverriegelung des Kraftfahrzeugs verschlossen werden kann. In dem Fach kann der elektrische Versorgungsanschluss angeordnet sein, welcher derart angeordnet ist, dass er mit der elektrischen Anschlussvorrichtung eines in dem Fach angeordneten Aufbewahrungsbehälters elektrisch leitend verbunden ist.

Eine Weiterbildung der Erfindung sieht vor, dass das Kraftfahrzeug eine Ortungsvorrichtung umfasst, welche dazu eingerichtet ist, Ortungssignale eines Aufbewahrungsbehälters zu empfangen und eine Lage des Aufbewahrungsbehälters bezüglich des Kraftfahrzeugs zu bestimmen. Mit anderen Worten umfasst das Kraftfahrzeug eine Ortungsvorrichtung, wobei es sich um eine Vorrichtung handelt, welche die von dem Aufbewahrungsbehälter ausgesandten Ortungssignale empfangen kann und aus den empfangenen Ortungssignalen eine Lage des Aufbewahrungsbehälters bezüglich des Kraftfahrzeugs bestimmt. Dadurch ergibt sich der Vorteil, dass der Aufbewahrungsbehälter mittels des Kraftfahrzeugs geortet werden kann. So ist es möglich, dass die Ortungsvorrichtung die Ortungssignale mittels einer Antenne empfangen kann und die Lage des Aufbewahrungsbehälters mittels einer Empfangsrichtung des Ortungssignals und einer Intensität des Ortungssignals bezüglich des Kraftfahrzeugs berechnen kann.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Aufbewahrungsbehälters beschrieben worden sind. Aus diesem Grund sind die entsprechenden Weiterbildungen des erfindungsgemäßen Kraftfahrzeugs hier nicht noch einmal beschrieben.

Im Folgenden ist ein Ausführungsbeispiel der Erfindung beschrieben. Hierzu zeigt:
- Fig. 1: eine Ausführungsform eines erfindungsgemäßen Kraftfahrzeugs;
- Fig. 2: eine Ausführungsform des erfindungsgemäßen Aufbewahrungsbehälters;
- Fig. 3: ein Schaltbild einer Ausführungsform des erfindungsgemäßen Aufbewahrungsbehälters ;
- Fig. 4: eine Ausführungsform des erfindungsgemäß vorgesehenem innenliegenden Autorisierungselements; und
- Fig. 5: einen Aufbau einer Ausführungsform des erfindungsgemäß vorgesehenem innenliegenden Autorisierungselements.

Die Erfindung umfasst auch die Kombinationen der beschriebenen Weiterbildungen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

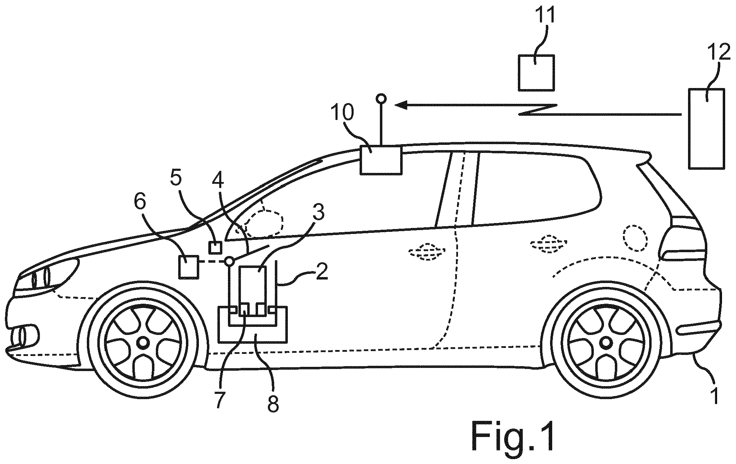

Fig. 1 zeigt eine Ausführungsform des erfindungsgemäßen Kraftfahrzeugs 1. Das Kraftfahrzeug 1 kann die Haltevorrichtung 2 für den Aufbewahrungsbehälter 3 aufweisen. In dem Aufbewahrungsbehälter 3 kann ein Benutzer einen Gegenstand aufbewahren, z.B. eine Geldbörse. Die Haltevorrichtung 2 kann beispielsweise als Fach in der Fahrertür oder der Fahrzeugkonsole in dem Kraftfahrzeuginnenraum angeordnet sein. Die Haltevorrichtung 2 kann die Verschlussvorrichtung 4 aufweisen, welche dazu eingerichtet sein kann, den Aufbewahrungsbehälter 3 zu arretieren und/oder zu umschließen. Die Verschlussvorrichtung 4 kann beispielsweise in Abhängigkeit von einem Zentralsignal 5 des Steuergeräts der Zentralverriegelung 6 des Kraftfahrzeugs 1 verriegelt oder entriegelt werden. Die Haltevorrichtung 2 kann der Art auf die Form des Aufbewahrungsbehälters 3 bemessen sein, dass die elektrische Anschlussvorrichtung 7 des Aufbewahrungsbehälters 3 und die elektrische Versorgungsvorrichtung 8 der Haltevorrichtung 2 elektrisch leitend miteinander verbunden sind, wenn sich der Aufbewahrungsbehälter 3 in der Haltevorrichtung 2 befindet. Die elektrische Versorgungvorrichtung 8 der Haltevorrichtung 2 kann beispielsweise Stecker und/oder Buchsen umfassen und mit einem elektrischen Energiespeicher des Kraftfahrzeugs 1 elektrisch leitend verbunden sein. Dadurch kann es möglich sein, für den elektrischen Energiespeicher des Aufbewahrungsbehälters 9 elektrische Leistung bereitzustellen. Das Kraftfahrzeug 1 kann die Ortungsvorrichtung 10 umfassen, welche dazu eingerichtet sein kann, die Ortungssignale 11 des innenliegenden Autorisierungselements 12 des Aufbewahrungsbehälters 3 zu empfangen und auf Grundlage der empfangenen Ortungssignale 11 eine Lage des Aufbewahrungsbehälters 3 bezüglich des Kraftfahrzeugs 1 zu bestimmen. Zu diesem Zweck kann die Ortungsvorrichtung 10 zumindest eine Ortungsantenne und einen Mikrocontroller umfassen.

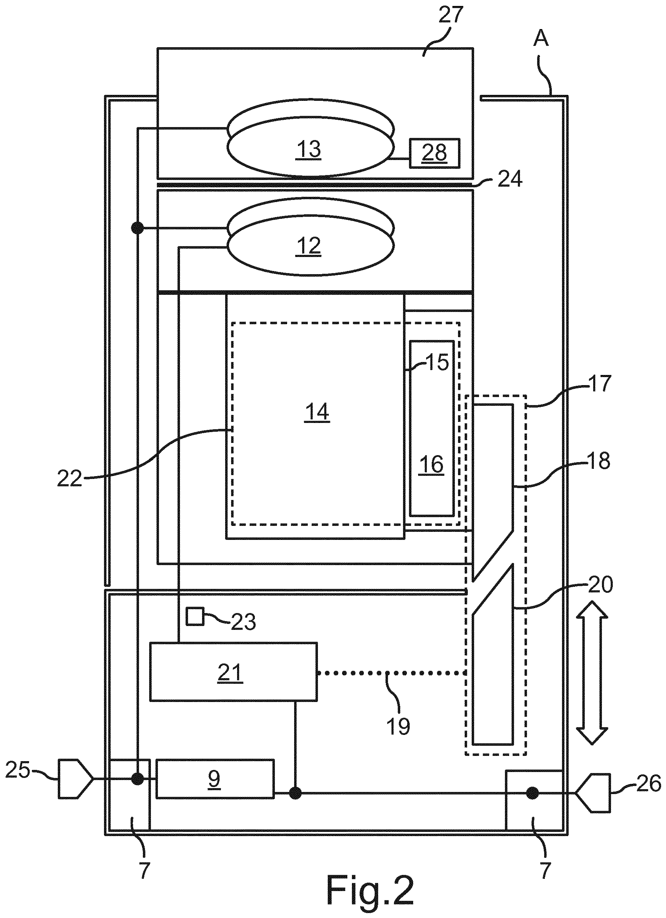

Fig. 2 zeigt eine Ausführungsform des erfindungsgemäßen Aufbewahrungsbehälters 3. Der Aufbewahrungsbehälter 3 kann beispielsweise eine Form eines Quader oder eines Zylinders aufweisen und durch eine Außenhülle A begrenzt sein. Innerhalb des Aufbewahrungsbehälters 3 kann die Aufbewahrungskammer 14 des Aufbewahrungsbehälters 3 angeordnet sein. Die Aufbewahrungskammer 14 kann durch die Kammerwand 15 und den Verschluss 16 umschlossen sein. Der Verschluss 16 kann durch das Verriegelungselement 17 verriegelt werden. Das Verriegelungselement 17 kann beispielsweise einen Verriegelungsdrehmechanismus 18 aufweisen, welcher einen an einer Achse 19 angeordneten Stößel 20 aufweist, welcher mittels des an der Achse 19 angeordneten elektrischen Motors 21 verriegelt und entriegelt werden kann. In einem entriegelten Zustand des Verschlusses 16 ist es möglich, diesen zu öffnen und auf die Aufbewahrungskammer 14 zuzugreifen. Der Motor 21 kann elektrisch leitend mit dem elektrischen Energiespeicher 9, beispielsweise einem Akkumulator verbunden sein. Der Aufbewahrungsbehälter 3 kann die elektrische Anschlussvorrichtung 7 aufweisen, welche dazu eingerichtet ist, elektrische Leistung für den elektrischen Energiespeicher 9 aufzunehmen und aus diesem abzugeben. Die Kammerwand 15 der Aufbewahrungskammer 14 und der Verschluss 16 können eine elektromagnetische Schirmungsvorrichtung 22 aufweisen, welche ein elektrisch leitendes Material aufweisen kann und die Aufbewahrungskammer 14 im verriegelten Zustand komplett umschließt. Die Schirmungsvorrichtung 22 kann eine durchgehende Fläche oder ein Netz aufweisen. Der Aufbewahrungsbehälter 3 kann das innenliegende Autorisierungselement 12 aufweisen, welches dazu eingerichtet sein kann, den Motor 21 des Aufbewahrungsbehälters 3 anzusteuern und mittels des Entriegelungssignals 23 an den Motor 21 eine Öffnung des Verriegelungselements 17 zu bewirken, um die Verriegelung des Verschlusses 16 der Aufbewahrungskammer 14 zu lösen. Es kann sein, dass der Aufbewahrungsbehälter 3 einen Ablagebereich 24 für das außenliegende Autorisierungselement 13 umfasst. Auf diesem Ablagebereich 24 kann das außenliegende Autorisierungselement 14 derart abgelegt werden, dass es mit einem elektrischen Pluspol 25 und einer elektrischen Masse 26 des Aufbewahrungsbehälters 3 elektrisch leitend verbunden ist. Das außenliegende Autorisierungselement 13 kann in einem Gehäuse 27 angeordnet sein, welches eine LED 28 aufweist. Das außenliegende Autorisierungselement 13 kann dazu eingerichtet sein, die LED 28 anzusteuern. So kann das außenliegende Autorisierungselement 13 beispielsweise ein Aufleuchten der LED 28 bei einem Versandt oder Empfang von Signalen bewirken.

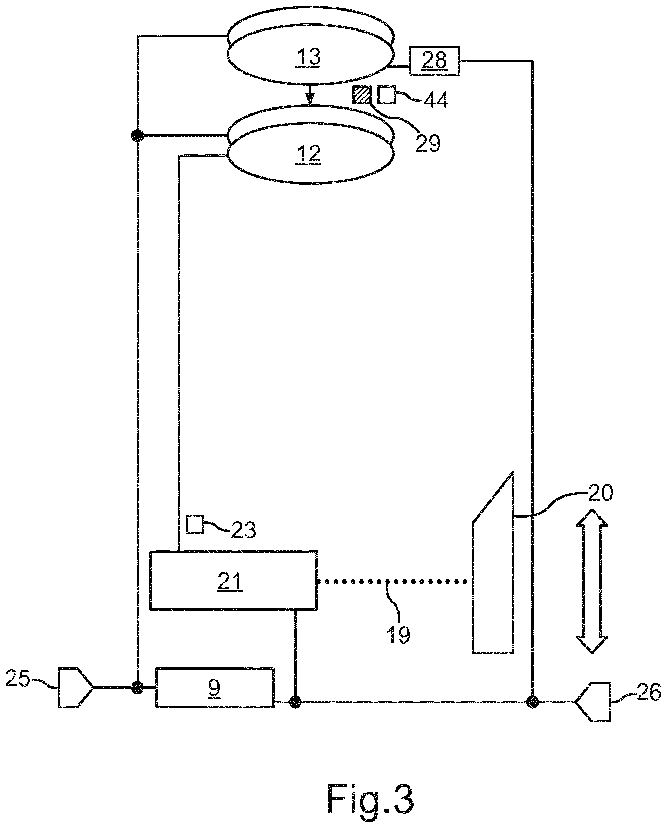

Fig. 3 zeigt ein Schaltbild einer Ausführungsform des erfindungsgemäßen Aufbewahrungsbehälters 3. Dabei kann es vorgesehen sein, dass die elektrische Anschlussvorrichtung 7 des Aufbewahrungsbehälters 3 den elektrischen Pluspol 25 und die elektrische Masse 26 aufweist, welche elektrisch leitend mit dem elektrischen Energiespeicher 9 des Aufbewahrungsbehälters verbunden sein können. Der elektrische Pluspol 25 kann auch mit dem innenliegenden Autorisierungselement 12 und dem außenliegenden Autorisierungselement 13 elektrisch leitend verbunden sein. Das außenliegenden Autorisierungselement 13 kann das Öffnungssignal 29 und die Bewegungsdaten 44 an das innenliegende Autorisierungselement 12 senden.

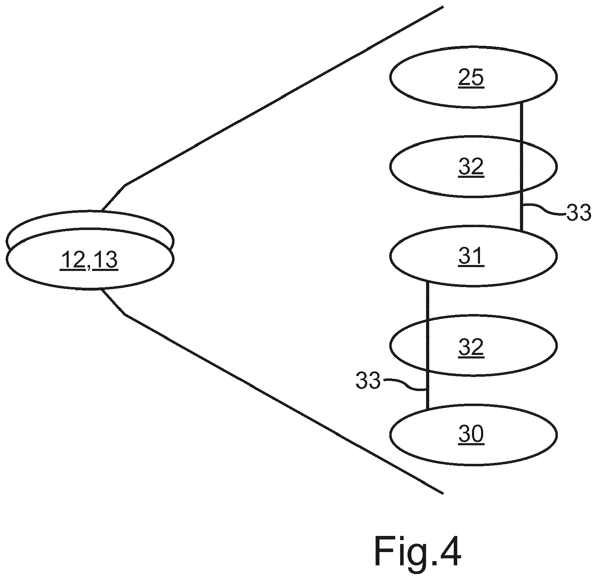

Fig. 4 zeigt eine Ausführungsform eines erfindungsgemäßen Autorisierungselements. Das innenliegende Autorisierungselement 12 und das außenliegende Autorisierungselement 13 können identisch aufgebaut sein und eine gleiche Hardware und Software aufweisen. Ein Pluspol 25 und ein Minuspol 30 des Autorisierungselements können elektrisch leitend mit dem elektrischen Energiespeicher 9 und mit der elektrischen Anschlussvorrichtung 7 des Aufbewahrungsbehälters 3 verbunden sein. Das Autorisierungselement kann eine Leiterplatte 31 umfassen, welche von den elektrischen Polen 25,30 durch elektrische Isolatoren 32 getrennt sein kann und jeweils nur eine Leitung 33 als Kontakt zur internen Schaltung auf der Leiterplatte 31 aufweist. Der Pluspol 25, die beiden elektrischen Isolatoren 32, die Leiterplatte 31 und der Minuspol 30 können formschlüssig miteinander verbunden und somit wasserdicht sein. Die Pole 25,30 des Autorisierungselements können eine elektrisch leitende Verbindung mit dem Aufbewahrungsbehälter 3 ermöglichen.

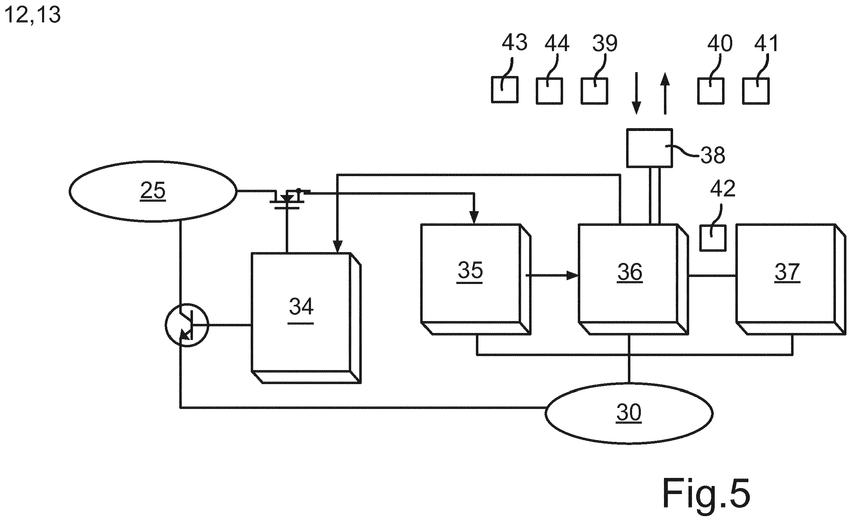

Fig. 5 zeigt einen Schaltplan einer Ausführungsform des erfindungsgemäßen Autorisierungselements 12,13. Der Schaltplan kann beispielsweise die Leiterplatte 31 der Fig. 4 beschreiben. Das Autorisierungselement 12,13 kann ein Schaltelement 34, einen elektrischen Energiespeicher des Autorisierungselements 35, einen Mikrocontroller als die Steuereinheit 36, den Bewegungssensor 37 und die Antenneneinrichtung 38 aufweisen. Der elektrische Energiespeicher des Autorisierungselements 35 kann beispielsweise als Akkumulator gestaltet sein. Es kann vorgesehen sein, dass der elektrische Energiespeicher des Autorisierungselements 35 über den Pluspol 25 und den Minuspol 30 des Autorisierungselements geladen werden kann. Der Pluspol 25 kann durch das Schaltelement 34 schaltbar ausgelegt sein, sodass eine Ladefunktion besteht oder über einen Transistor der Pluspol 25 und Minuspol 30 kurzgeschlossen werden können. Hiermit können Funktionen zur Ansteuerung des Motors 21 des Aufbewahrungsbehälters und die LED 28 angesteuert werden. Die Leiterplatte 31 kann einen MOSFETT als Schaltelement 34 umfassen. Eine Kommunikation des Autorisierungselements mit einem anderen Autorisierungselement kann über die Antenneneinrichtung 38 erfolgen. Das innenliegende Autorisierungselement 12 kann dazu eingerichtet sein, den Identifikationscode 39 des Funkschlüssels in der Aufbewahrungskammer 14 mittels der Antenneneinrichtung 38 auszulesen und das Sperrsignal 40 an das Steuergerät der Zentralverriegelung des Kraftfahrzeugs 6 zu senden. Das interne Autorisierungselement 12 kann dazu eingerichtet sein, ein Deaktivierungssignal 41 an das Mobiltelefon in der Aufbewahrungskammer 14 zu senden. Eine Bewegungscharakteristik 42 des innenliegenden Autorisierungselements 12 kann mittels des Bewegungssensors 37 erfasst werden. Mittels der Antenneneinrichtung können Bewegungsdaten 44 betreffend die Bewegungscharakteristik 43 des außenliegenden Autorisierungselements empfangen werden. Die Bewegungscharakteristiken 42,43 können mittels der Steuereinheit verglichen werden. Stimmen beispielsweise zeitliche Verläufe einer Lage der Bewegungscharakteristiken 42,43 überein, weil der Benutzer das außenliegende Autorisierungselement an den Aufbewahrungsbehälter 3 hält während dies das Öffnungssignal 29 sendet, so kann die Steuereinheit 36 das Entriegelungssignal 23 erzeugen und an das Verriegelungselement 17 versenden. Dadurch kann der Verschlusses 16 entriegelt werden. Es kann sein, dass der Verschluss 16 von dem Benutzer geöffnet werden kann.

Insgesamt zeigt das Beispiel, wie durch die Erfindung eine diebstahlsichere Aufbewahrung von Gegenständen in einem Kraftfahrzeuginnenraum ermöglicht wird.

### Bezugszeichenliste

- 1: Kraftfahrzeug
- 2: Haltevorrichtung
- 3: Aufbewahrungsbehälter
- 4: Verschlussvorrichtung
- 5: Zentralsignal
- 6: Steuergerät der Zentralverriegelung
- 7: Elektrische Anschlussvorrichtung
- 8: Elektrische Versorgungvorrichtung
- 9: Elektrischer Energiespeicher des Aufbewahrungsbehälters
- 10: Ortungsvorrichtung
- 11: Ortungssignal
- 12: Innenliegendes Autorisierungselement
- 13: Außenliegendes Autorisierungselement
- 14: Aufbewahrungskammer
- 15: Kammerwand
- 16: Verschluss
- 17: Verriegelungselement
- 18: Verriegelungsdrehmechanismus
- 19: Achse
- 20: Stößel
- 21: Motor
- 22: Schirmungsvorrichtung
- 23: Entriegelungssignal
- 24: Ablagebereich
- 25: Pluspol
- 26: Elektrische Masse
- 27: Gehäuse
- 28: LED
- 29: Öffnungssignal
- 30: Minuspol
- 31: Leiterplatte
- 32: Eektrische Isolatoren
- 33: Leitung
- 34: Schaltelement
- 35: Energiespeicher des Autorisierungselements
- 36: Steuereinheit des Autorisierungselements
- 37: Bewegungssensor
- 38: Antenneneinrichtung
- 39: Identifikationscode
- 40: Sperrsignal
- 41: Deaktivierungssignal
- 42: Bewegungscharakteristik des innenliegenden Autorisierungselements
- 43: Bewegungscharakteristik des außenliegenden Autorisierungselements
- 44: Bewegungsdaten
- A: Außenhülle

## Patentansprüche

1. Aufbewahrungsbehälter (3) für ein Kraftfahrzeug (1), aufweisend:
- ein Verriegelungselement (17), eingerichtet zum Verriegeln eines Verschlusses (16) einer Aufbewahrungskammer (14) des Aufbewahrungsbehälters (3),
- einen Motor (21), eingerichtet zum Öffnen und Schließen des Verriegelungselements (17),
- ein innenliegendes Autorisierungselement (12), aufweisend eine Antenneneinrichtung (38), eingerichtet zum Empfangen eines Öffnungssignals (29) eines von dem Aufbewahrungsbehälter (3) verschiedenen außenliegenden Autorisierungselements (13) und aufweisend eine Steuereinheit (36), eingerichtet zur Ansteuerung des Motors (21),
**dadurch gekennzeichnet, dass**
- das innenliegende Autorisierungselement (12) einen Bewegungssensor (37) aufweist, welcher dazu eingerichtet ist, eine Bewegungscharakteristik (42) des innenliegenden Autorisierungselements (12) zu erfassen,
- das innenliegende Autorisierungselement (12) dazu eingerichtet ist, Bewegungsdaten (44) betreffend eine Bewegungscharakteristik (43) des außenliegenden Autorisierungselements (13) über die Antenneneinrichtung (38) zu empfangen und mittels der Steuereinheit (36) mit seiner eigenen Bewegungscharakteristik (42) zu vergleichen,
- das innenliegende Autorisierungselement (12) dazu eingerichtet ist, bei dem Empfang des Öffnungssignals (29) und einer mit der Bewegungscharakteristik (42) des innenliegenden Autorisierungselements (12) übereinstimmenden Bewegungscharakteristik (43) des außenliegenden Autorisierungselements (13) ein Entriegelungssignal zur Öffnung des Verriegelungselements (17) mittels der Steuereinheit (36) für den Motor (21) zu erzeugen.

2. Aufbewahrungsbehälter (3) nach Anspruch 1, **dadurch gekennzeichnet, dass** eine Kammerwand (15) der Aufbewahrungskammer (14) und der Verschluss (16) eine elektromagnetische Schirmungsvorrichtung (22) mit einem elektrisch leitendem Material aufweisen und die Aufbewahrungskammer (14) im verriegelten Zustand komplett durch die Schirmungsvorrichtung (22) umschlossen ist.

3. Aufbewahrungsbehälter (3) nach einem der vorhergehenden Ansprüche, **dadurch gekennzeichnet, dass** der Aufbewahrungsbehälter (3) einen elektrischen Energiespeicher (9) umfasst, welcher dazu eingerichtet ist, den Motor (21) mit elektrischer Energie zu versorgen.

4. Aufbewahrungsbehälter (3) nach Anspruch 3, **dadurch gekennzeichnet, dass** der Aufbewahrungsbehälter (3) eine elektrische Anschlussvorrichtung (7) umfasst, welcher dazu eingerichtet ist, elektrische Leistung für den elektrischen Energiespeicher (9) aufzunehmen und aus diesem abzugeben.

5. Aufbewahrungsbehälter (3) nach einem der vorhergehenden Ansprüche, **dadurch gekennzeichnet, dass** das innenliegende Autorisierungselement (12) dazu eingerichtet ist, einen Identifikationscode (39) eines Funkschlüssels auszulesen, falls der Funkschlüssels in der Aufbewahrungskammer (14) angeordnet ist, und ein Sperrsignal (40) für den Identifikationscode (39) an ein Steuergerät (6) einer Zentralverriegelung des Kraftfahrzeugs zu senden.

6. Aufbewahrungsbehälter (3) nach einem der vorhergehenden Ansprüche, **dadurch gekennzeichnet, dass** das innenliegende Autorisierungselement (12) dazu eingerichtet ist, ein Deaktivierungssignal (41) an ein Mobiltelefon zu senden, falls das Mobiltelefon in der Aufbewahrungskammer (14) angeordnet ist.

7. Aufbewahrungsbehälter (3) nach einem der vorhergehenden Ansprüche, **dadurch gekennzeichnet, dass** das innenliegende Autorisierungselement (12) dazu eingerichtet ist, mittels der Antenneneinrichtung (38) ein Ortungssignal (11) auszusenden.

8. Kraftfahrzeug (1), **dadurch gekennzeichnet, dass** das Kraftfahrzeug (1) eine Haltevorrichtung (2) für einen Aufbewahrungsbehälter sowie einen Aufbewahrungsbehälter (3) nach einem der Ansprüche 1 bis 7 aufweist, wobei
- die Haltevorrichtung (2) eine Verschlussvorrichtung (4) umfasst, welche dazu eingerichtet ist, den Aufbewahrungsbehälter (3) zu arretieren und/oder zu umschließen, und
- die Haltevorrichtung (2) einen elektrischen Versorgungsanschluss (8) aufweist, welcher dazu eingerichtet ist, elektrische Leistung für eine elektrische Anschlussvorrichtung (7) des Aufbewahrungsbehälters (3) bereitzustellen.

9. Kraftfahrzeug (1) nach Anspruch 8, **dadurch gekennzeichnet, dass** das Kraftfahrzeug (1) eine Ortungsvorrichtung (10) umfasst, welche dazu eingerichtet ist, Ortungssignale (11) eines Aufbewahrungsbehälters (3) nach Anspruch 7 zu empfangen und eine Lage des Aufbewahrungsbehälters (3) bezüglich des Kraftfahrzeugs (1) zu bestimmen.

## Claims

1. Storage container (3) for a motor vehicle (1), comprising:
- a locking element (17) configured to lock a closure (16) of a storage chamber (14) of the storage container (3),
- a motor (21) configured to open and close the locking element (17),
- an internal authorization element (12) comprising an antenna device (38) configured to receive an opening signal (29) of an external authorization element (13) other than the storage container (3), and comprising a control unit (36) configured to drive the motor (21),
**characterized in that**
- the internal authorization element (12) comprises a motion sensor (37) configured to detect a movement characteristic (42) of the internal authorization element (12),
- the internal authorization element (12) is configured to receive movement data (44) relating to a movement characteristic (43) of the external authorization element (13) via the antenna device (38), and to compare them with its own movement characteristic (42) by means of the control unit (36),
- the internal authorization element (12) is configured to, upon receiving the opening signal (29) and a movement characteristic (43) of the external authorization element (13) corresponding to the movement characteristic (42) of the internal authorization element (12), generate an unlocking signal for opening the locking element (17) by means of the control unit (36) for the motor (21).

2. Storage container (3) according to claim 1, **characterized in that** a chamber wall (15) of the storage chamber (14) and the closure (16) comprise an electromagnetic shielding device (22) having an electrically conductive material, and the storage chamber (14) is completely enclosed by the shielding device (22) in the locked state.

3. Storage container (3) according to one of the preceding claims, **characterized in that** the storage container (3) comprises an electrical energy storage device (9) configured to supply electrical energy to the motor (21).

4. Storage container (3) according to claim 3, **characterized in that** the storage container (3) comprises an electrical connection device (7) which is configured to receive electrical power for the electrical energy storage device (9) and to discharge it therefrom.

5. Storage container (3) according to one of the preceding claims, **characterized in that** the internal authorization element (12) is configured to read out an identification code (39) of a remote key in the event that the remote key is arranged in the storage chamber (14), and to send a blocking signal (40) for the identification code (39) to a control unit (6) of a central locking system of the motor vehicle.

6. Storage container (3) according to one of the preceding claims, **characterized in that** the internal authorization element (12) is configured to send a deactivation signal (41) to a mobile phone in the event that the mobile phone is arranged in the storage chamber (14).

7. Storage container (3) according to one of the preceding claims, **characterized in that** the internal authorization element (12) is configured to emit a locating signal (11) by means of the antenna device (38).

8. Motor vehicle (1), **characterized in that** the motor vehicle (1) has a holding device (2) for a storage container along with a storage container (3) according to one of claims 1 to 7, wherein
- the holding device (2) comprises a closure device (4) which is configured to lock and/or enclose the storage container (3), and
- the holding device (2) has an electrical supply connection (8) which is configured to provide electrical power for an electrical connection device (7) of the storage container (3).

9. Motor vehicle (1) according to claim 8, **characterized in that** the motor vehicle (1) comprises a locating device (10) which is configured to receive locating signals (11) of a storage container (3) according to claim 7, and to determine a position of the storage container (3) relative to the motor vehicle (1).

## Revendications

1. Conteneur de stockage (3) pour un véhicule automobile (1), présentant :
- un élément de verrouillage (17), conçu pour le verrouillage d'une fermeture (16) d'une chambre de stockage (14) du conteneur de stockage (3),
- un moteur (21), conçu pour l'ouverture et la fermeture de l'élément de verrouillage (17),
- un élément d'autorisation (12) disposé à l'intérieur, présentant un dispositif d'antenne (38), conçu pour la réception d'un signal d'ouverture (29) d'un élément d'autorisation (13) disposé à l'extérieur différent du conteneur de stockage (3) et présentant une unité de commande (36), conçue pour la commande du moteur (21),
**caractérisé en ce que**
- l'élément d'autorisation (12) disposé à l'intérieur présente un capteur de mouvement (37), lequel est conçu pour détecter une caractéristique de mouvement (42) de l'élément d'autorisation (12) disposé à l'intérieur,
- l'élément d'autorisation (12) disposé à l'intérieur est conçu pour recevoir à travers l'unité d'antenne (38) des données de mouvement (44) concernant une caractéristique de mouvement (43) de l'élément d'autorisation (13) disposé à l'extérieur et pour les comparer au moyen de l'unité de commande (36) avec sa propre caractéristique de mouvement (42),
- l'élément d'autorisation (12) disposé à l'intérieur est conçu pour, lors de la réception du signal d'ouverture (29) et d'une caractéristique de mouvement (43) de l'élément d'autorisation (13) disposé à l'extérieur correspondant à la caractéristique de mouvement (42) de l'élément d'autorisation (12) disposé à l'intérieur, générer un signal de déverrouillage pour l'ouverture de l'élément de verrouillage (17) au moyen de l'unité de commande (36) pour le moteur (21).

2. Conteneur de stockage (3) selon la revendication 1, **caractérisé en ce qu'**une paroi de chambre (15) de la chambre de stockage (14) et la fermeture (16) présentent un dispositif de blindage électromagnétique (22) comprenant un matériau électriquement conducteur et la chambre de stockage (14) est, à l'état verrouillé, complètement entourée par le dispositif de blindage électromagnétique (22).

3. Conteneur de stockage (3) selon l'une quelconque des revendications précédentes, **caractérisé en ce que** le conteneur de stockage (3) comprend un accumulateur d'énergie électrique (9), lequel est conçu pour alimenter le moteur (21) en énergie électrique.

4. Conteneur de stockage (3) selon la revendication 3, **caractérisé en ce que** le conteneur de stockage (3) comprend un dispositif de raccordement électrique (7), lequel est conçu pour recevoir une puissance électrique pour l'accumulateur d'énergie électrique (9) et pour l'extraire de celui-ci.

5. Conteneur de stockage (3) selon l'une quelconque des revendications précédentes, **caractérisé en ce que** l'élément d'autorisation (12) disposé à l'intérieur est conçu pour lire un code d'identification (39) d'une clé à télécommande, si la clé à télécommande est disposée dans la chambre de stockage (14) et pour envoyer un signal de verrouillage (40) pour le code d'identification (39) à un appareil de commande (6) d'un verrouillage central du véhicule automobile.

6. Conteneur de stockage (3) selon l'une quelconque des revendications précédentes, **caractérisé en ce que** l'élément d'autorisation (12) disposé à l'intérieur est conçu pour envoyer un signal de désactivation (41) à un téléphone mobile si le téléphone mobile est disposé dans la chambre de stockage (14).

7. Conteneur de stockage (3) selon l'une quelconque des revendications précédentes, **caractérisé en ce que** l'élément d'autorisation (12) disposé à l'intérieur est conçu pour émettre un signal de localisation (11) au moyen du dispositif d'antenne (38).

8. Véhicule automobile (1), **caractérisé en ce que** le véhicule automobile (1) présente un dispositif de retenue (2) pour un conteneur de stockage ainsi qu'un conteneur de stockage (3) selon l'une quelconque des revendications 1 à 7,
- le dispositif de retenue (2) comprenant un dispositif de fermeture (4), lequel est conçu pour bloquer et/ou entourer le conteneur de stockage (3) et
- le dispositif de retenue (2) présentant un raccord d'alimentation électrique (8), lequel est conçu pour fournir une puissance électrique pour un dispositif de raccordement électrique (7) du conteneur de stockage (3).

9. Véhicule automobile (1) selon la revendication 8, **caractérisé en ce que** le véhicule automobile (1) comprend un dispositif de localisation (10), lequel est conçu pour recevoir des signaux de localisation (11) d'un conteneur de stockage (3) selon la revendication 7 et pour déterminer un emplacement du conteneur de stockage (3) par rapport au véhicule automobile (1).
